# EUROPÄISCHE PATENTSCHRIFT

(11) **EP 0 899 474 B1**
(45) Veröffentlichungstag und Bekanntmachung des Hinweises auf die Patenterteilung: **13.11.2002**
(21) Anmeldenummer: 98114864.6
(22) Anmeldetag: 07.08.1998
(51) Int. Cl.: F16D 27/00, F16D 37/00

(54) **Kupplung**
Clutch
Embrayage

(30) Priorität: 19.08.1997 DE 19735897
(43) Veröffentlichungstag der Anmeldung: 03.03.1999
(73) Patentinhaber: BAYER AG, 51368 Leverkusen (DE); CARL SCHENCK AG, 64293 Darmstadt (DE)
(72) Erfinder: Wendt, Eckhardt, Dr., 51373 Leverkusen (DE); Pohl, Andreas, 64823 Gross-Umstadt (DE); Rosenfeldt, Horst, Dr., 64846 Grosszimmern (DE)
(74) Vertreter: von Kreisler, Alek, Dipl.-Chem.

(56) Entgegenhaltungen:
- US-A- 2 605 876
- US-A- 4 350 913

## Beschreibung

Die Erfindung betrifft eine steuerbare Kupplung auf Basis elektrorheologischer oder magnetorheologischer Flüssigkeiten, bei der eine Kraftübertragung bzw. Übertragung von Drehmomenten dadurch erreicht wird, daß eine elektrorheologische oder magnetorheologische Flüssigkeit durch einen Elektroden- bzw. Magnetspalt der Kupplung mittels einer als Kolben wirkende Fläche gedrückt wird.

Kupplungen auf Basis elektrorheologischer Flüssigkeiten sind grundsätzlich bekannt, siehe Z.B. US-A-2605 876. Die bekannten Kupplungen auf Basis elektrorheologischer Flüssigkeiten bieten den Vorteil, daß das übertragbare Drehmoment stufenlös über ein elektrisches Feld steuerbar ist. Durch den Einfluß des elektrischen Feldes ändern diese Flüssigkeiten ihre apparente Viskosität. Stand der Technik bei derartigen Kupplungen sind Schreiben und Topfläuferkupplungen, die z.B. in den "Conference Proceedings ACTUATOR 92", 3rd International Conference on New Actuators, Seiten 118 bis 122, Bullough oder in den "Proceedings of the 2nd International Conference on Elektrorheological Fluids", 1989, Seiten 426 bis 435, Carlson beschrieben sind.

Im ersten Fall handelt es sich um eine Topfläuferkupplung (Zylindersystem) und im zweiten Fall um eine Mehrfachscheibenkupplung jeweils mit einer elektrorheologischen Flüssigkeit zur Steuerung der Kupplung. Beiden Kupplungen ist gemein, daß die elektrorheologische Flüssigkeit zwischen sich relativ zueinander bewegenden Flächen geschert wird.

Üblicherweise bezeichnet man in der Literatur eine derartige Betriebsweise als "Schermodus" (engl.: shear-mode).

Der Aufbau derartiger Kupplungen hat deutliche Mängel, die in der Struktur der elektrorheologischen Flüssigkeiten begründet sind. Da es sich bei technisch nutzbaren Flüssigkeiten üblicherweise um Dispersionen von Partikeln in Trägermedien handelt und die Partikel eine höhere Dichte als die Trägermedien aufweisen, kommt es bei hoher Drehzahl in Kupplungen und Bremsen zu einer starken Zentrifugalbeschleunigung und damit zu einer Entmischung von Partikeln und Trägerflüssigkeit. Die Scherwirkung der sich gegeneinander bewegenden Flächen reicht nicht aus, um eine vollständige Redispergierung der Partikel zu erreichen. Der zuvor beschriebene Effekt der stufenlosen Steuerung der apparenten Viskosität über ein Feld ist dann grundsätzlich stark eingeschränkt bzw. gegebenenfalls völlig ausgeschaltet.

Bei elektrorheologischen Flüssigkeiten ergeben sich durch die Ansteuerung mittels Gleichspannung in solchen Kupplungen weitere Schwierigkeiten aufgrund der Elektrophorese der ERF-Teilchen. Hierunter versteht man die Wanderung der Partikel im elektrischen Feld in Richtung eines Poles. Prinzipiell sind die Folgen die gleichen wie durch die Zentrifugalbeschleunigung.

Üblicherweise spricht man von Kupplungen, wenn ein beschleunigendes Drehmoment übertragen werden soll. Im Falle der Übertragung eines verzögernden Drehmomentes spricht man von Bremse. Die erfindungsgemäßen Kupplungen sind ebenfalls als Bremse einsetzbar.

Die vorliegende Erfindung überwindet die vorgenannten Nachteile bekannter Kupplungen durch die Nutzung der elektrorheologischen Flüssigkeit bzw. magnetorheologischen Flüssigkeit im Fließmodus (engl.: flow-mode). Bei diesem Modus wird die Flüssigkeit durch einen Elektroden- bzw. Magnetspalt mittels einer als Kolben wirkende Fläche gedrückt.

Hierbei kommt es zu einer permanenten vollständigen Redispergierung der Partikel in der Trägerflüssigkeit. Die Funktion der elektrorheologischen Flüssigkeit bzw. magnetorheologischen Flüssigkeit ist hierdurch gewährleistet. Im Falle von elektrorheologischen Flüssigkeiten ergibt sich weiterhin der besondere Vorteil, daß die Flüssigkeiten im Fließmodus eine höhere elektrorheologische Aktivität als im Schermodus aufweisen. Demgemäß ist es erfindungsgemäß möglich, auch ein höheres Drehmoment zu übertragen, ohne daß sich die Eigenschaften der elektrorheologischen oder magnetorheologischen Flüssigkeiten über längere Betriebszeiten drastisch verschlechtern.

Gegenstand der Erfindung ist eine Kupplung auf Basis elektrorheologischer oder magnetorheologischer Flüssigkeiten enthaltend ein im wesentlichen rotationssymmetrisches Gehäuse mit einer in dem Gehäuse drehbar gelagerten Achse, wobei das Gehäuse mindestens eine scheibenförmige oder zylinderspaltförmige achsensymmetrische Kammer aufweist, Mittel zur Erzeugung eines elektrischen bzw. magnetischen Feldes zwischen den scheibenförmigen oder zylinderförmigen Begrenzungsflächen jeder der Kammern, wobei die Kammern mit einer elektrorheologischen oder magnetorheologischen Flüssigkeit gefüllt sind, mit dem Kennzeichen, daß Mittel aus elektrisch isolierendem bzw. nicht magnetischem Material zur Unterteilung der Kammer in mindestens zwei Sektoren vorgesehen sind, wobei mindestens eine der scheibenförmigen oder zylinderförmigen Begrenzungsflächen mit einem der Elemente Gehäuse und Achse fest verbunden sind und die Mittel zur Unterteilung der Kammern in Sektoren mit dem anderen der Elemente Gehäuse und Achse fest verbunden ist.

Die auf elektrorheologischen Flüssigkeiten basierenden Kupplungselemente werden über elektrische Spannungen angesteuert, durch die die in den Kupplungselementen enthaltenen Kondensatoren elektrische Felder zur Steuerung der rheologischen Größen Fließgrenze und Modul der elektrorheologischen Flüssigkeiten aufbauen.

Unter elektrorheologischen Flüssigkeiten werden Dispersionen fein verteilter elektrisch polarisierbarer Teilchen in hydrophoben, elektrisch hoch isolierenden Ölen (allgemein Suspension elektrisch polarisierbarer nicht leitender Teilchen) verstanden, die unter Einfluß eines elektrischen Feldes mit hinreichend starker elektrischer Feldstärke schnell und reversibel ihre Fließgrenze bzw. ihren Schub- oder Schermodul unter Umständen über mehrere Größenordnungen ändern. Die ERF wechselt dabei gegebenenfalls vom dünnflüssigen über den plastischen bis nahezu zum festen Aggregatzustand.

Beispiele für geeignete elektrorheologische Flüssigkeiten sind in den Offenlegungsschriften DE 35 17 281 A1, DE 35 36 934 A1, DE 39 41 232 A1, DE 40 26 881 A1, DE 41 31 142 A1 und DE 41 19 670 A1 genannt.

Zur Anregung der elektrorheologischen Flüssigkeiten dienen sowohl elektrische Gleich- als auch Wechselspannungsfelder. Die hierbei erforderliche elektrische Leitung ist vergleichsweise gering.

Zur Steuerung des Fließverhaltens der elektrorheologischen Flüssigkeit in den Kupplungselementen kann ein Sensor benutzt werden, wie er z.B. in der Deutschen Offenlegungsschrift DE 36 09 861 A1 beschrieben ist.

Unter magnetorheologischen Flüssigkeiten (MRF) versteht man Suspensionen feinverteilter magnetischer Partikel mit einer Partikelgröße von einigen nm bis zu einigen um in geeigneten Flüssigkeiten wie Mineral- oder Silikonölen, wobei der Feststoffanteil der Suspension typischerweise etwa 20 bis 60 Vol.-% beträgt. Magnetorheologische Flüssigkeiten verändern ihren Fließwiderstand unter Einfluß eines starken Magnetfeldes in Abhängigkeit von der Magnetfeldstärke. Sie erreichen je nach Typ Schubspannungswerte von bis zu 100 kPa.

Die Kraftübertragung zwischen den als Achse und Gehäuse bezeichneten Elementen erfolgt über die Flüssigkeitsreibung in der scheibenförmigen oder zylinderförmigen Kammer. Sie ist über die Veränderung der in der Kammer herrschenden elektrischen oder magnetischen Feldstärke regelbar. Bei bekannten derartigen Kupplungen sind in der Flüssigkeit erzeugte Scherkräfte für die Kraftübertragung verantwortlich. Aufgrund der erfindungsgemäßen Unterteilung der Kammer in mindestens zwei Sektoren, beispielsweise durch ein Speichenrad, das zwischen den Begrenzungsflächen der Kammern angeordnet ist, und das mit einem der Elemente Gehäuse bzw. Achse fest verbunden ist, wird die Flüssigkeit in den Sektoren mitgeführt, so daß die Vorderseite in Bezug auf die relative Drehrichtung der Speiche des Speichenrades als Kolben auf die Flüssigkeit wirkt.

Vorzugsweise sind beide Begrenzungsflächen der mindestens einen Kammer mit dem Gehäuse verbunden und die Mittel zur sektoralen Unterteilung der Kammern fest mit der Achse verbunden. Vorzugsweise sind diese als Speichenscheiben ausgebildet. Die Speichenscheiben können zwei oder mehr Speichen aufweisen. Zu viele Speichen würden allerdings die aktive Fläche der Kupplung zu stark abdecken. Erfindungsgemäß sollen daher nicht mehr als sechs Speichen vorgesehen sein.

Nach einer weiter bevorzugten Ausführungsform der Erfindung erfolgt die Kraftübertragung sowohl über Schub- als auch über Scherkräfte. Hierzu ist eine der Begrenzungsflächen der scheibenförmigen oder zylinderförmigen Kammer mit dem Gehäuse fest verbunden und die andere Begrenzungsfläche der Kammer mit der Achse verbunden, so daß die relative Drehbewegung zwischen Achse und Gehäuse in der Flüssigkeit Scherkräfte erzeugt, und die Mittel zur sektoralen Unterteilung der Kammer sind mit einer der Begrenzungsflächen fest verbunden, beispielsweise in Form von radial auf der Begrenzungsfläche angeordneten Stegen im Falle einer scheibenförmigen Kammer bzw. als achsenparallele Stege im Falle einer zylinderförmigen Kammer.

Im Falle einer erfindungsgemäßen Kupplung auf Basis elektrorheologischer Flüssigkeiten bestehen die scheibenförmigen oder zylinderförmigem Begrenzungsflächen der Kammer aus elektrisch leitfähigem Material, sind elektrisch gegeneinander isoliert und an die Pole einer Hochspannungsquelle anschließbar. Die elektrisch isolierenden Bauteile einer solchen Kupplung können aus Keramik, Glas oder hoch-zähen formstabilen Kunststoffen wie Polypropylensulfid oder Polycarbonat oder anderen technischen Polymeren, die gegebenenfalls Verstärkungsfüllstoffe oder Glasfasern enthalten können, bestehen.

Im Falle einer Kupplung auf Basis magnetorheologischer Flüssigkeiten bestehen die Begrenzungsflächen der Kammer aus magnetisierbarem Material, vorzugsweise weich-ferromagnetischem Material. Die Magnetisierung erfolgt mittels einer Magnetspule.

Die Erfindung wird nachfolgend anhand der beigefügten Figuren näher erläutert:
- Fig. 1: zeigt einen Längs- (a) und einen Querschnitt (b) durch eine erste erfindungsgemäße elektrorheologische Kupplung.
- Fig. 2: zeigt einen Längs- und einen Querschnitt durch eine zweite elektrorheologische Kupplung mit zwei Kammern.
- Fig. 3: zeigt einen Längs- und einen Querschnitt durch eine erfindungsgemäße elektrorheologische Kupplung mit zwei Kammern, wobei die Kraftübertragung über Scher- und Schubkräfte erfolgt.
- Fig. 4: zeigt eine erfindungsgemäße magnetorheologische Kupplung.
- Fig. 5: zeigt eine zweite Ausführungsform einer magnetorheologischen Kupplung, wobei die Kammer in Form eines Ringspaltes ausgebildet ist.

Gleiche Ziffern in den Figuren bezeichnen jeweils analoge Elemente.

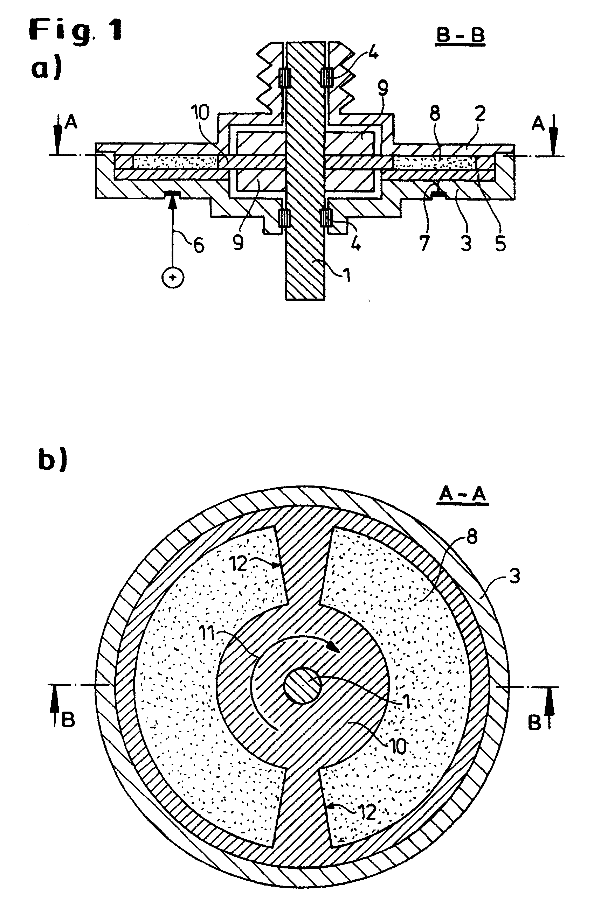

Die elektrorheologische Kupplung gemäß Fig. 1 enthält eine angetriebene oder antreibbare Achse 1 sowie ein aus zwei Teilen bestehendes Gehäuse, in dem die Achse 1 über Walzenlager 4 drehbar ist. Der aus isolierendem Material bestehende Gehäuseteil 3 weist auf seiner Innenseite eine scheibenförmige Elektrode 5 auf, die über einen Schleifkontakt 6 und eine durch das Gehäuse 3 geführte Verbindungsleitung 7 mit einer Hochspannungsquelle verbunden werden kann. Der aus leitfähigem Material bestehende Gehäuseteil 2 ist geerdet. Der Gehäuseteil 2 bildet zusammen mit der Hochspannungselektrode 5 die scheibenförmige Kammer 8, die mit einer elektrorheologischen Flüssigkeit gefüllt ist. Mittels Klemmbacken 9 mit der Achse 1 fest verbunden ist die Speichenscheibe 10 aus isolierendem Material.

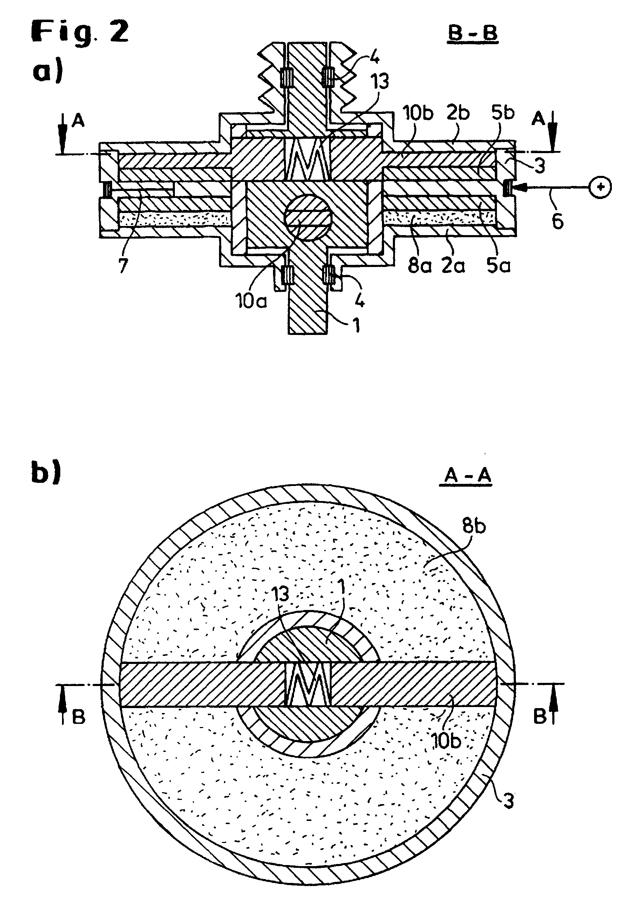

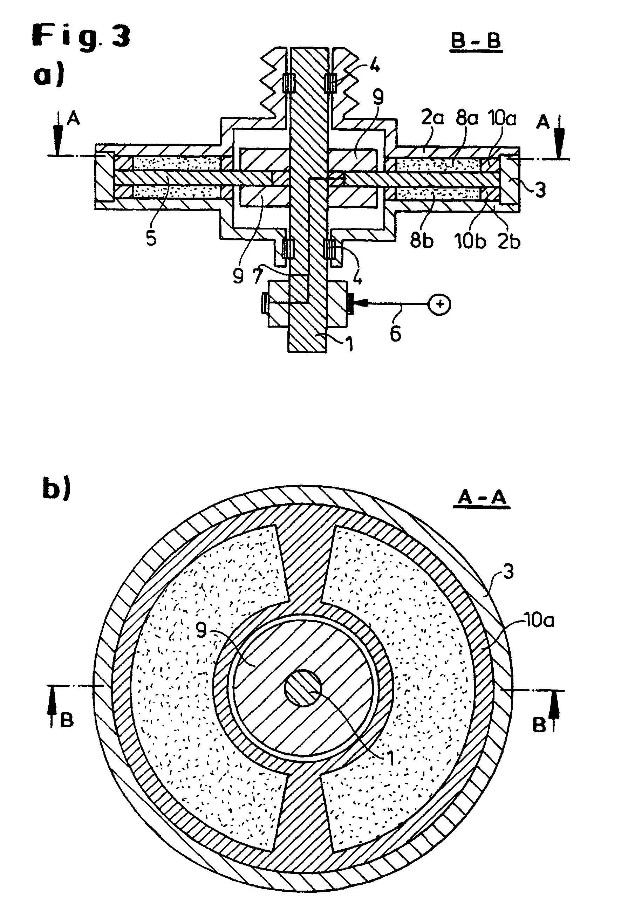

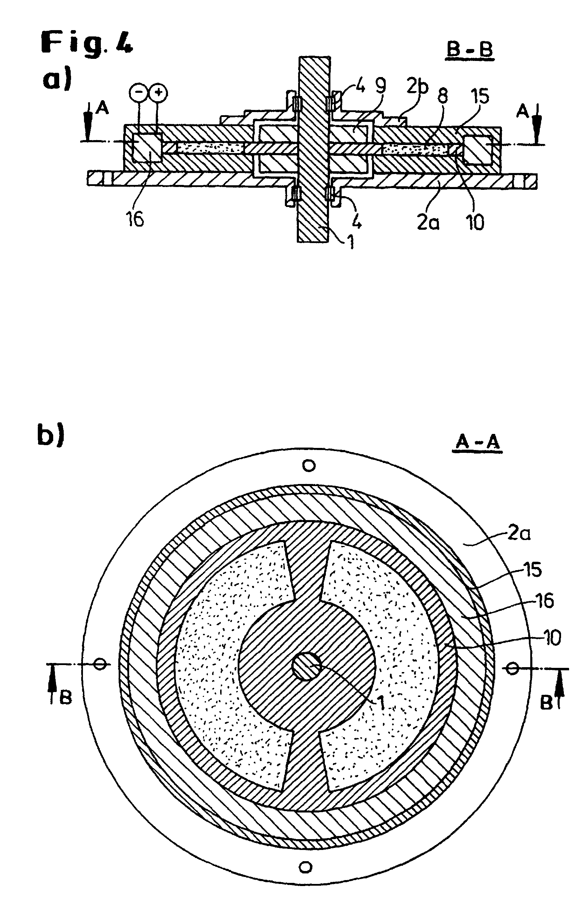

Wird nun das Gehäuse 2, 3 zur Rotation angetrieben, beispielsweise in Richtung des Pfeiles 11, so wird aufgrund der Reibungskräfte die die seitlichen Begrenzungsflächen der scheibenförmigen Kammer 8 auf die elektrorheologische Flüssigkeit ausüben, auf die in Drehrichtung rückseitigen Flächen der Speichen 12 ein Druck ausgeübt, der die Speichenscheibe 10 und die mit ihr fest verbundene Achse 1 in Rotation versetzt. Durch Anlegen eines elektrischen Feldes, typischerweise Hochspannung im Bereich einiger Kilovolt, wird die Viskosität der elektrorheologischen Flüssigkeit erhöht, so daß der Druck auf die Speichen ebenfalls erhöht wird. Bei der aus zwei Kammern bestehenden elektrorheologischen Kupplung gemäß Fig. 2 besteht das Gehäuse aus zwei Teilen 2a und 2b aus leitfähigem Material und einem dritten Teil 3 aus isolierendem Material. Anstelle der Speichenscheibe sind Speichen 10 vorgesehen, die in die innerhalb des Gehäusesradius vergrößerte Achse 2 eingesetzt sind, und die über Federelemente 13 schleifend gegen das Gehäuseteil 3 gedrückt werden. Die Speichen 10a und 10b sind in den Kammern 8a und 8b um 90° gegeneinander versetzt. In der elektrorheologischen Doppelkammer-Kupplung gemäß Fig. 3 ist die Hochspannungselektrode 5 über Klemmbacken 9 aus isolierendem Material fest mit der Achse 1 verbunden. Die Speichenscheiben 10a und 10b sind fest mit dem Gehäuseteil 2a bzw. 2b verbunden. Die magnetorheologische Kupplung gemäß Fig. 4 weist eine Spule 16 mit einem magnetischen Anker 15 auf, dessen Pole die Begrenzungsflächen der scheibenförmigen Kammer 8 bilden. Der magnetische Fluß durch den Anker wird über die in der Kammer 8 befindliche magnetorheologische Flüssigkeit geschlossen. Die mit der Achse 1 fest verbundene Speichenscheibe 10 kann in diesem Falle aus nicht magnetisierbarem Metall, beispielsweise Aluminium bestehen.

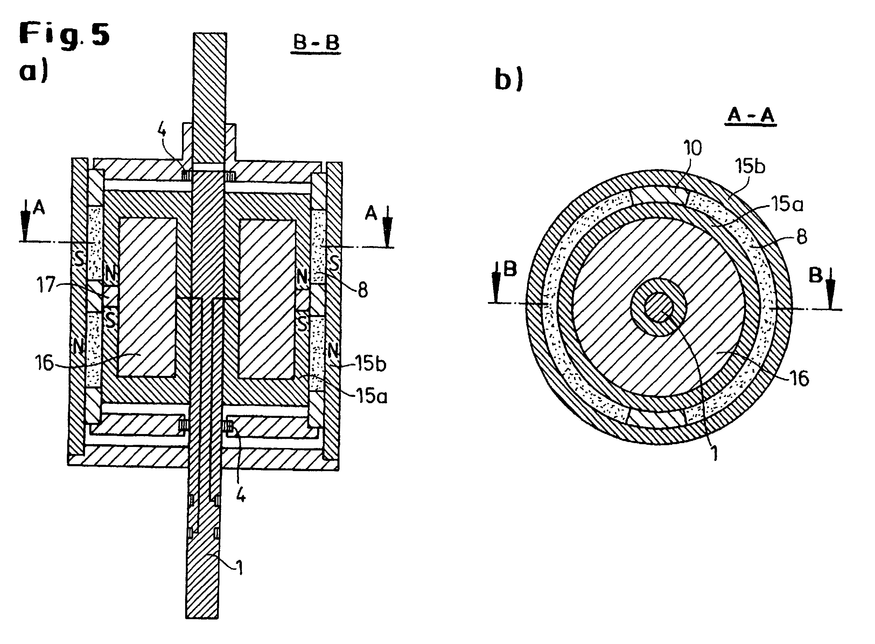

Die magnetorheologische Kupplung gemäß Fig. 5 weist einen Ringspalt 5 für die Aufnahme der magnetorheologischen Flüssigkeit auf. Innerhalb des Ringspaltes 5 befindet sich die Magnetspule 16 mit dem magnetisierbaren Kern 15a. Der magnetische Fluß durch den Kern 15a ist durch einen Ring aus nicht magnetisierbarem Material 17 unterbrochen. Er wird über die in dem Ringspalt 8 befindliche magnetorheologische Flüssigkeit und den äußeren Mantel 15b aus magnetisierbarem Material geschlossen.

## Patentansprüche

1. Kupplung auf Basis elektrorheologischer oder magnetorheologischer Flüssigkeiten enthaltend ein im wesentlichen rotationssymmetrisches Gehäuse (2,3) mit einer in dem Gehäuse drehbar gelagerten Achse (1), wobei das Gehäuse mindestens eine scheibenförmige oder ringspaltförmige achsensymmetrische Kammer (8) aufweist, Mittel (6,7) zur Erzeugung eines elektrischen bzw. magnetischen Feldes zwischen den scheibenförmigen oder zylindermantelförmigen Begrenzungsflächen jeder der Kammern, wobei die Kammern (8) mit einer elektrorheologischen oder magnetorheologischen Flüssigkeit gefüllt sind, mit dem Kennzeichen, daß Mittel (10) aus elektrisch isolierendem bzw. nicht magnetischem Material zur Unterteilung der Kammer in mindestens zwei Sektoren vorgesehen sind, wobei mindestens einer der scheibenförmigen oder zylindermantelförmigen Begrenzungsflächen mit einem der Elemente Gehäuse und Achse fest verbunden sind und die Mittel zur Unterteilung der Kammern in Sektoren mit dem anderen der Elemente Gehäuse und Achse fest verbunden ist.

2. Kupplung nach Anspruch 1, wobei beide Begrenzungsflächen der mindestens einen Kammer mit dem Gehäuse verbunden sind und die Mittel zur sektoralen Unterteilung der Kammern in Form von fest mit der Achse verbundenen Speichenscheibe (12) ausgebildet sind.

3. Kupplung nach Anspruch 1, wobei eine der Begrenzungsflächen der mindestens einen Kammer mit dem Gehäuse verbunden ist, die andere Begrenzungsfläche als fest mit der Achse verbunden ist und die Mittel zur sektoralen Unterteilung der Kammer mit einer der Begrenzungsflächen verbunden ist.

4. Kupplung auf Basis elektrorheologischer Flüssigkeiten nach einem der Ansprüche 1 bis 3, wobei die scheibenförmigen oder zylindermantelförmigen Begrenzungsflächen gegeneinander elektrisch isoliert sind und an die Pole einer Hochspannungsquelle anschließbar sind.

5. Kupplung auf Basis magnetorheologischer Flüssigkeiten nach Anspruch 1 oder 2, wobei die Begrenzungsflächen der Kammer aus ferromagnetischem Material bestehen und durch eine Magnetspule magnetisierbar sind.

## Claims

1. A clutch based on electrorheological or magnetorheological liquids, containing a substantially rotationally symmetrical housing (2,3) with a shaft (1) rotatably mounted in the housing, wherein the housing comprises at least one axially symmetrical chamber (8) in the shape of a disc or in the shape of an annular gap, means (6,7) for generating an electric or magnetic field between the boundary faces, which are in the shape of a disc or in the shape of a cylindrical outer surface, of each of the chambers, wherein the chambers (8) are filled with an electrorheological or magnetorheological liquid, with the **characterizing** feature that means (10) made of electrically insulating or non-magnetic material are provided for subdividing the chamber into at least two sectors, wherein at least one of the boundary faces which are in the shape of a disc or in the shape of a cylindrical outer surface, is fixedly attached to one of the elements comprising the housing and shaft, and the means for subdividing the chambers into sectors are fixedly attached to the other of the elements comprising the housing and shaft.

2. A clutch according to claim 1, wherein both boundary faces of the at least one chamber are attached to the housing and the means for the sectoral subdivision of the chambers are constructed in the form of spoked discs (12) which are fixedly attached to the shaft.

3. A clutch according to claim 1, wherein one of the boundary faces of the at least one chamber is attached to the housing, the other boundary face is fixedly attached to the shaft, and the means for the sectoral subdivision of the chamber are attached to one of the boundary faces.

4. A clutch based on electrorheological liquids according to any one of Claims 1 to 3, wherein the boundary faces which are in the shape of a disc or in the shape of a cylindrical outer surface, are electrically insulated from each other and can be connected to the terminals of a source of high voltage.

5. A clutch based on magnetorheological liquids according to Claims 1 or 2, wherein the boundary faces of the chamber comprise ferromagnetic material and can be magnetized by a magnetizing coil.

## Revendications

1. Embrayage à base de fluides électrorhéologiques ou magnétorhéologiques comprenant un boîtier (2, 3) pour l'essentiel à symétrie de révolution, comportant un axe (1) logé rotativement dans le boîtier, dans lequel le boîtier présente au moins une chambre (8) axialement symétrique en forme de disque ou en forme d'expacement annulaire, des moyens (6, 7) pour produire un champ électrique ou magnétique entre les surfaces de limitation en forme de disque ou en forme d'enveloppe cylindrique de chacune des chambres, dans lequel les chambres (8) sont remplies d'un fluide électrorhéologique ou magnétorhéologique, avec la caractéristique que des moyens (10) en matière électriquement isolante ou non magnétique sont prévus pour la subdivision de la chambre en au moins deux secteurs, dans lequel au moins une des surfaces de limitation en forme de disque ou en forme d'enveloppe cylindrique est liée fixement à l'un dudit boîtier et dudit axe et les moyens pour la subdivision des chambres en secteurs sont liés fixement à l'autre dudit boîtier et dudit axe.

2. Embrayage selon la revendication 1, dans lequel les deux surfaces de limitation de ladite au moins une chambre sont reliées au boîtier et les moyens de subdivision sectorielle des chambres sont configurés en forme de disques à rayons (12) liés fixement à l'axe.

3. Embrayage selon la revendication 1, dans lequel l'une des surfaces de limitation de ladite au moins une chambre est liée au boîtier, l'autre surface de limitation est liée fixement à l'axe et les moyens de subdivision sectorielle de la chambre sont liés à l'une des surfaces de limitation.

4. Embrayage à base de fluides électrorhéologiques selon l'une des revendications 1 à 3, dans lequel les surfaces de limitation en forme de disque ou en forme d'enveloppe cylindrique sont isolées électriquement l'une par rapport à l'autre et sont raccordables aux pôles d'une source de haute tension.

5. Embrayage à base de fluides magnétorhéologiques selon la revendication 1 ou 2, dans lequel les surfaces de limitation de la chambre sont constituées de matière ferromagnétique et sont magnétisables au moyen d'une bobine magnétique.
